# FASCICULE DE BREVET EUROPEEN

(11) **EP 0 719 999 B1**
(45) Date de publication et mention de la délivrance du brevet: **24.02.1999**
(21) Numéro de dépôt: 94810757.8
(22) Date de dépôt: 29.12.1994
(51) Int. Cl.: G01B 3/20

(54) **Dispositif de mesure de longueur**
Längenmessvorrichtung
Length measuring device

(43) Date de publication de la demande: 03.07.1996
(73) Titulaire: Brown & Sharpe Tesa S.A., 1020 Renens (CH)
(72) Inventeur: Zanier, Adriano, CH-1008 Prilly/VD (CH)
(74) Mandataire: BOVARD AG - Patentanwälte

(56) Documents cités:
- CH-A- 101 636
- CH-A- 165 061
- DE-A- 3 434 993
- DE-A- 3 834 306
- DE-A- 4 207 142
- DE-U- 9 005 309
- FR-A- 2 481 441
- FR-A- 2 703 145
- PATENT ABSTRACTS OF JAPAN vol. 7 no. 224 (P-227) [1369] ,5 Octobre 1983 & JP-A-58 115301 (TAJIMA SEISAKUJIYO K.K.) 9 Juillet 1983,

## Description

La présente invention a pour objet un dispositif de mesure de longueur, par exemple du type pied à coulisse ou trusquin. Plus particulièrement, cette invention a pour objet le problème du guidage du coulisseau pour un pied à coulisse ou pour un trusquin et le problème du réglage de parallélisme des becs.

Depuis peu, on sait fabriquer des pieds à coulisse et des trusquins de grande précision avec des matériaux tels que l'aluminium ou les matières synthétiques, qui offrent l'avantage connu de la légèreté et du faible coût de fabrication. Le modèle d'utilité DE-U-9112923.0, déposé le 17 octobre 1991 par la Société Anonyme des Etablissements Pierre Roch, montre un exemple d'un tel pied à coulisse.

Dans le dispositif décrit dans ce modèle d'utilité, le coulisseau 3 est guidé lors du coulissement par une nervure 16 faisant partie du coulisseau et engagée dans une première coulisse 14 appartenant à la perche. Un ressort 8 engagé dans une deuxième coulisse 13 offre une deuxième surface de guidage tout en exerçant une pression d'appui du coulisseau contre la règle.

Toutefois, dans cette réalisation, la surface de contact entre les parties mobiles (coulisseau et ressort) et les parties fixes (perche) est importante, ce qui produit un frottement rendant la manipulation du pied à coulisse malaisée, particulièrement dans le cas de pieds à coulisse de grande dimension. Ce frottement n'est d'ailleurs pas réglable, à moins de remplacer le ressort. En outre, la totalité de la surface des coulisses 13, 14, et même apparemment la surface externe de la perche, participent au guidage, alors que seul le fond de la coulisse est à l'abri des chocs. Si la perche est endommagée, elle risque ainsi de ne plus assurer un guidage précis du coulisseau, ou même d'empêcher complètement son coulissement. C'est particulièrement vrai lorsque la perche est réalisée dans un métal mou tel que l'aluminium.

La nervure 16 doit correspondre exactement à la rainure 14, ce qui impose des tolérances de fabrication strictes et des coûts importants. Si la perche ou le coulisseau sont construits dans un matériau sujet à l'usure, la longévité du pied à coulisse n'est pas assurée. En outre, le parallélisme des becs est obtenu une fois pour toutes, par usinage au cours de la fabrication. Des défauts de parallélisme, dus par exemple à une construction imprécise du mécanisme de guidage décrit ci-dessus, à une fixation du bec fixe 2 imparfaite ou à des déformations suite à l'usure ou à un choc, ne peuvent que très difficilement être corrigés.

La demande de brevet FR-A-2'481'441 (Latschbacher) (voir en particulier la figure 4) décrit un instrument de mesure de longueur dans lequel le coulisseau 3 est guidé sur la perche 1 par des éléments rapportés 17, 18 disposés sur deux faces opposées du coulisseau. Les éléments rapportés 17, 18 comportent des gorges longitudinales dont la forme correspond au profil des petits côtés 7, 8 de la perche. Là aussi, la fabrication nécessite des tolérances sévères, et l'usure et le frottement sont importants.

Un but de la présente invention est de proposer un dispositif de mesure de longueur, tel que pied à coulisse ou trusquin par exemple, assurant un frottement minimal entre la règle et le coulisseau, et un déplacement sans à-coups du coulisseau. Avantageusement, ce frottement peut être réglé simplement, à l'aide de vis.

Un autre but est de proposer un dispositif de mesure de longueur dans lequel les parties de la perche chargées du guidage sont à l'abri des chocs.

Un autre but est de proposer un pied à coulisse dans lequel le parallélisme des becs peut être corrigé facilement, même après la fabrication, en faisant pivoter soit le bec fixe, soit le bec mobile.

Un autre but de l'invention est de proposer un pied à coulisse offrant la possibilité de monter ou de remplacer le coulisseau ou le bec fixe individuellement, et d'ajuster le parallélisme après coup. Cette modularité permet une plus grande souplesse au cours de la fabrication, et au cours de l'utilisation permet de remplacer les parties usées sans devoir changer tout le pied à coulisse.

Pour cela, la présente invention propose un dispositif de mesure de longueur comportant:
- une perche munie d'une première coulisse longitudinale et sur une face opposée d'une deuxième coulisse longitudinale,
- un coulisseau pouvant coulisser autour de ladite perche sans contact direct, la position dudit coulisseau par rapport à ladite perche permettant de mesurer une longueur, ledit coulisseau étant muni d'une première gorge longitudinale et d'une deuxième gorge longitudinale
- un premier axe de guidage longitudinal engagé dans ladite première coulisse et dans ladite première gorge
- et un deuxième axe de guidage longitudinal engagé dans ladite deuxième coulisse et dans ladite deuxième gorge,
caractérisé en ce que la surface de contact entre la première coulisse et le premier axe de guidage est inférieure à la surface externe de la partie de l'axe engagée dans ladite première coulisse.

Selon une autre caractéristique de l'invention, la surface de contact entre la deuxième coulisse et le deuxième axe de guidage est inférieure à la surface externe de la partie de l'axe engagée dans ladite deuxième coulisse.

Selon une autre caractéristique de l'invention, au moins une desdites surfaces de contact est réduite à un ou plusieurs segments de droites

Selon une autre caractéristique de l'invention, au moins un des axes de guidage est en appui sur le coulisseau à ses deux extrémités seulement.

La présente invention sera mieux comprise à l'aide des figures annexées et de la description s'y rapportant:
- la figure 1 montre une vue générale d'un pied à coulisse.
- la figure 2 montre en coupe un pied à coulisse incorporant la présente invention.
- la figure 3 montre une coupe selon l'axe III-III du dispositif de guidage de l'invention implémenté dans un pied à coulisse
- la figure 4 montre une première variante d'axe et de coulisse
- la figure 5 montre une deuxième variante d'axe et de coulisse.
- la figure 6 montre une troisième variante d'axe et de coulisse.
- la figure 7 montre un élément de ressort

Les figures de cette invention se rapportent toutes au problème particulier du pied à coulisse. Il est toutefois utile de mentionner que l'invention s'applique tout aussi bien à tout type de dispositifs de mesure de longueur, de profondeur, d'écartement ou de diamètre, par exemple à un trusquin permettant de mesurer une hauteur ou une longueur.

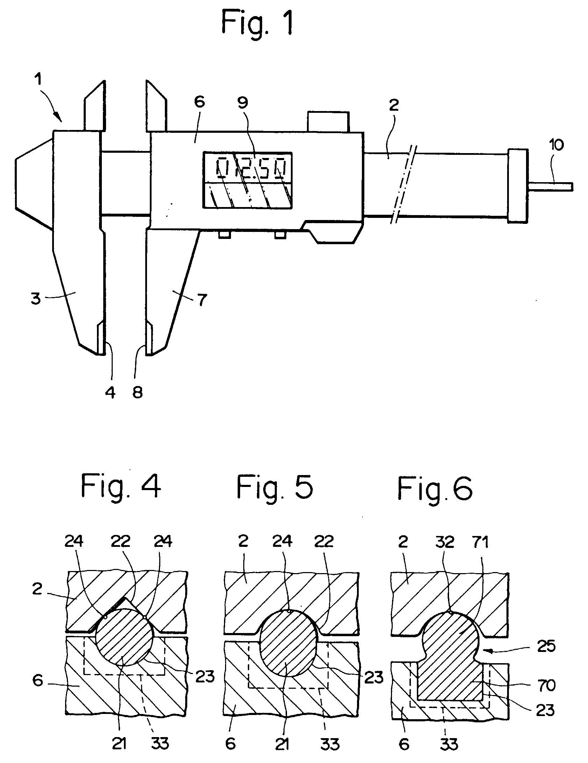

De manière connue, le pied à coulisse 1 de la figure 1 comporte une perche 2 sur laquelle peut coulisser un coulisseau 6. Un bec fixe 3, comprenant une première face de référence 4, est fixé à la perche de telle sorte que la première face de référence soit au moins approximativement perpendiculaire à la perche. Dans une autre réalisation, la première face de référence pourrait faire un angle avec la perche différent de 90°, par exemple 45°. Un bec mobile 7 est solidaire du coulisseau et comprend une deuxième face de référence 8 parallèle à la première. Un dispositif d'affichage numérique 9 indique l'écartement entre les deux faces de référence. La mesure de longueur, correspondant à l'écartement des becs, peut par exemple être effectuée à l'aide d'un système capacitif ou électro-optique. Dans une variante, le dispositif d'affichage peut aussi être de type analogique, par exemple à montre, ou la lecture de l'écartement peut se faire à l'aide d'une échelle à vernier connue. Une jauge de profondeur 10 peut être fixée au coulisseau pour effectuer des mesures de profondeur. La perche ainsi que le coulisseau sont réalisés de préférence en aluminium, et le coulisseau peut être revêtu d'une protection antichocs en matériau synthétique, non représentée sur les figures, comme il est connu par exemple de CH671097 (Hans Meyer, 31/07/1989). L'invention s'applique aussi à une perche et/ou un coulisseau en matériau synthétique ou en acier. Les becs sont de préférence entièrement en acier. On verra plus loin le principe de fixation du bec fixe sur la perche, qui autorise une correction du parallélisme des becs. Dans une variante, les becs peuvent aussi être réalisés en aluminium; dans ce cas, les faces de référence seront de manière connue réalisée en acier et fixées aux becs par collage ou par tout autre moyen.

Le dispositif de guidage de l'invention est maintenant expliqué à l'aide des figures 2 et 3. Les détails qui ne sont pas importants pour la compréhension de l'invention, tels que par exemple l'électronique d'affichage ou de mesure, n'ont pas été représentés afin d'alléger les figures.

Le coulisseau 6 entoure complètement la perche 2. Le coulisseau pourrait aussi n'entourer la perche que partiellement, par exemple sur trois côtés. Selon une caractéristique importante de l'invention, il n'y a aucun contact direct entre la perche et le coulisseau, ce qui permet de réduire le frottement et les problèmes de grippage pouvant survenir suite à des chocs subis par la perche.

Le guidage du coulisseau est effectué au moyen de deux axes de guidage longitudinaux 21 et 25. Le premier axe de guidage 25, dit aussi lardon ou axe d'ajustement, est engagé dans une première gorge 26 usinée, par exemple par fraisage ou extrusion, dans la face supérieure de la partie interne du coulisseau et simultanément dans une première coulisse 27 usinée dans la perche. Le deuxième axe de guidage 21, dit aussi palier ou axe de référence, est engagé dans une deuxième gorge 23 usinée dans la face inférieure de la partie interne du coulisseau et simultanément dans une deuxième coulisse 22 usinée dans la perche. Ces axes de guidage, qui doivent pouvoir résister à l'usure, peuvent être réalisés en un matériau différent de la perche et/ou du coulisseau, mais de dureté compatible avec celle de la perche. Par exemple, ils peuvent être réalisés en aluminium anodisé, en bronze au beryllium, ou en acier traité par nickelage. Ils peuvent également être recouvert d'une couche de Téflon afin de diminuer le frottement. De préférence, leur dureté sera supérieure ou égale à 50 HRC.

La forme des coulisses 22, respectivement 27, est adaptée à la forme des axes de guidage 21, respectivement 25, de manière à avoir une surface de contact mutuel 24, respectivement 32, minimale. Cette surface de contact est de préférence inférieure à la surface externe de la partie de l'axe de guidage engagée dans la coulisse, partie délimitée sur la figure 3 par un trait mixte. Idéalement, cette surface se réduit à un ou plusieurs segments de droites. Cette caractéristique permet d'assurer un guidage longitudinal précis et un frottement diminué. En outre, de cette manière, les zones de guidage se trouvent confinées dans une partie bien à l'abri des chocs, vers le fond des coulisses.

De préférence, la partie des axes de guidage engagée dans les premières et deuxièmes coulisses a une section en segment circulaire et les coulisses ont une section correspondant à un segment circulaire d'un cercle de diamètre supérieur. De cette manière, la surface de contact entre chaque axe de guidage et la coulisse correspondante se réduit à un segment de droite 24, respectivement 32. De bons résultats ont ainsi été obtenus avec une différence entre les diamètres de coulisse et d'axe de guidage d'environ 0,1 mm.

D'autres formes de coulisses et d'axe de guidage sont représentées sur les figures 4 à 6, qui illustrent le cas de la deuxième coulisse et du second axe de guidage (référence), mais qui pourraient sans difficultés s'adapter au cas de la première coulisse et du premier axe de guidage (ajustement). Sur la figure 4, la coulisse 23 a un profil triangulaire alors que l'axe de guidage 21 a un profil circulaire. Dans cette configuration, la surface de contact se réduit à deux segments de droites 24. Cette disposition procure un guidage du coulisseau encore plus précis. D'autres configurations de coulisses et d'axe de guidage, non représentées, ont été imaginées qui permettent d'avoir une surface de contact réduite à un ou plusieurs segments de droites. Des coulisses polygonales, par exemple trapézoïdales avec des angles entre les parois et le fond de la coulisse compris entre environ 30° et environ 60°, combinées avec des axes de guidage circulaires ou sensiblement ovales permettent au prix d'un coût de fabrication plus élevés d'avoir un guidage très précis, une surface de contact qui se réduit à des segments de droites et un risque de blocage réduit même en cas de déformations de la perche. Des coulisses plus profondes, de forme elliptique, ovale ou comportant des parois planes et un fond arrondi, combinées avec des axes circulaires, elliptiques ou sensiblement ovales appropriés, permettent en outre de reléguer la surface de contact au fond de la coulisse dans une zone très bien protégée des chocs.

Sur la figure 5, la coulisse a la même forme que sur la figure 3 alors que la gorge 23 a une forme adaptée à un axe de guidage 21 sensiblement ovale. De cette manière, l'axe de guidage est encore mieux maintenu latéralement dans la gorge et le risque de battage est réduit. Ce maintien latéral est encore amélioré sur la réalisation de la figure 6. L'axe de guidage de cette réalisation a un profil comportant une section 70 de forme carrée ou rectangulaire surmontée par une autre section 71 de forme arrondie, de préférence circulaire. La section de forme carrée est usinée avec des tolérances strictes pour être adaptée à la gorge sans jeu. La section arrondie est adaptée à la coulisse, de manière à avoir une surface de contact inférieure à la surface de la coulisse, si possible réduite à une ligne de contact. Cette variante permet un excellent maintien latéral de l'axe dans la gorge. Cette forme d'axe de guidage est aussi particulièrement bien adaptée à la forme de première gorge 26 et de première coulisse 27 représentée sur la figure 3.

De préférence, la forme des axes de guidage sera suffisamment simple pour pouvoir être obtenus par étirage au moyen d'une filière.

Selon une autre caractéristique de l'invention, illustrée en relation avec la figure 2, le second axe de guidage 21 est en appui sur le coulisseau 6 à ses deux extrémités seulement. Entre ces deux points d'appui 40, un dégagement 33 est taillé dans le coulisseau au-dessous de l'axe. Entre les deux points d'appui, l'axe reste ainsi flexible dans le dégagement, ce qui permet d'absorber les éventuelles imperfections géométriques et donc de garantir un fonctionnement précis, à faible frottement et sans à-coups ni risque de grippage.

Le premier axe de guidage 25 est maintenu en appui contre la perche 2 à ses deux extrémités par deux vis 28 engagées à travers le coulisseau. Ces vis permettent de régler la pression exercée par l'axe sur la perche et de rattraper le jeu de tolérance de fabrication. Le coulisseau n'exerce une pression sur le premier axe en direction de la perche qu'au travers de ces vis, le premier axe de guidage conservant une certaine flexibilité entre les deux points d'appui constituées par les pointes des vis. En revanche, les faces latérales de la première gorge 26 sont usinées de manière à empêcher tout déplacement latéral du premier axe de guidage. Sur la réalisation représentée par la figure 3, il y a deux segments de contact 31 entre le premier axe de guidage 25 et le coulisseau 6. Cette disposition permet de minimiser le basculement radial des becs (battage). Ce basculement serait encore davantage réduit si le premier axe de guidage avait la forme d'axe illustrée sur la figure 6.

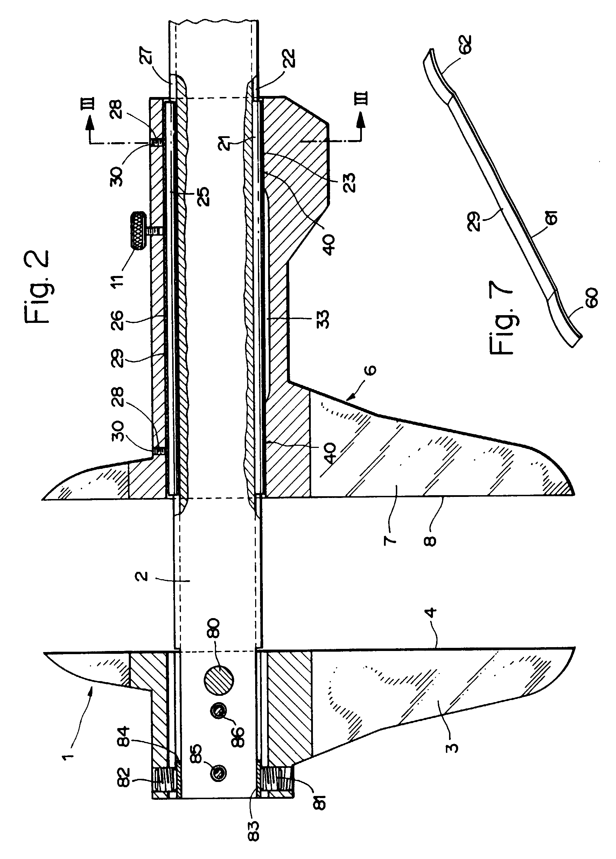

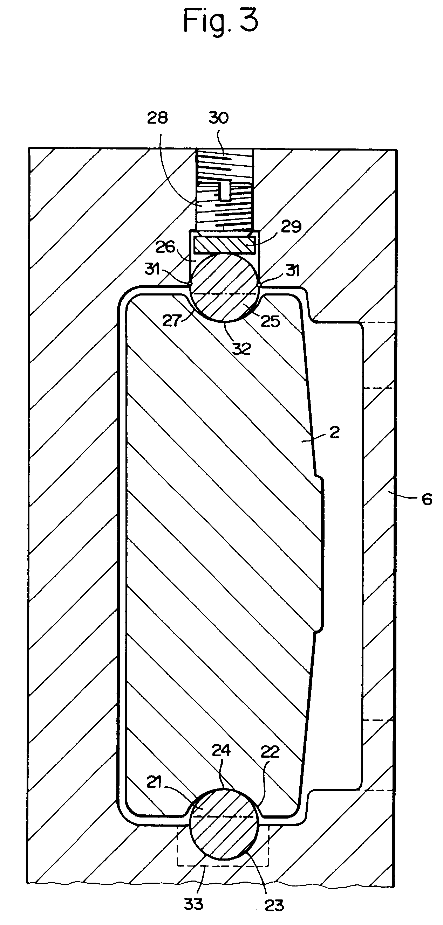

Une lame ressort 29, représentée en détail sur la figure 7, exerce une pression sur toute la longueur du premier axe de guidage 25 en direction de la perche 2. Cette lame comporte une première partie bombée 60, une partie droite 61 et une deuxième partie bombée 62. La force de maintien en place de la lame ressort est de l'ordre de quelques Newtons. Lors du montage, les parties bombées du ressort sont comprimées à fond, à la tolérance de fonctionnement près. Cette lame ressort permet d'absorber le jeu de fonctionnement des pièces mobiles, d'assurer une force de frottement constante et de corriger les faibles défauts de parallélisme.

Une vis 11 permet de régler le frottement du premier axe de guidage sur la perche. Contrairement aux vis 28 qui sont de préférence réglées une seule fois lors de la fabrication, ou au cours d'une opération d'entretien, cette vis permet de régler quotidiennement la facilité de déplacement du coulisseau, ou de le bloquer complètement à un écartement donné.

Le revêtement antichoc synthétique mentionné, non illustré sur les figures, retient les axes de guidage et les empêche de glisser. Alternativement, des butées pourraient être intégrées au coulisseau à l'extrémité de chaque axe de guidage. Le second axe de guidage pourrait aussi être rendu solidaire du coulisseau 6 au niveau des deux points d'appui 40 du coulisseau par n'importe quel moyen connu.

Nous allons maintenant revenir à la figure 2 pour étudier le problème de la fixation du bec fixe 3 sur la perche.

Dans l'état de l'art, le parallélisme des faces de référence 4 et 8 des becs 3 et 7 est obtenu par usinage de l'ensemble monté, par exemple par rectifiage.

Il en résulte des coûts importants, et il est presque impossible de corriger ce parallélisme après la fabrication, par exemple lors d'une réparation. Si ces inconvénients étaient encore tolérables pour des pieds à coulisse en acier dont le coût de fabrication est de toute façon élevé et qui sont suffisamment solides pour subir très peu de déformations, ils deviennent tout à fait inacceptables pour des pieds à coulisse en aluminium qui doivent pouvoir être fabriqués à très faible coût et peuvent de surcroît nécessiter une réparation. En outre, si la perche a subi des déformations perturbant le glissement, l'action de correction nécessaire sur les vis 28 du coulisseau peut même conduire à une perte de parallélisme qui doit pouvoir être compensée.

Le bec fixe 3 peut pivoter par rapport à la perche 2 autour de l'axe 80 qui est le point de rotation du bec. Deux vis de réglage 81 et 82 permettent le réglage fin du parallélisme des deux faces de référence 4 et 8. Ces deux vis, placées en opposition, assurent aussi le blocage de la position. Le réglage peut s'effectuer en fermant les becs et en ajustant les deux vis jusqu'à ce que les deux faces soient parfaitement plaquées l'une contre l'autre. Une cale étalon, placée entre les becs, peut aussi être utilisée au cours du réglage.

Dans le cas particulièrement où des matériaux tendres tels que l'aluminium ont été utilisés, une cale 83 peut être placée sous une des vis au moins pour répartir la pression. De même, un ressort à lame 84 peut être placé sous une des vis au moins pour maintenir la contrainte de serrage. Ce ressort aura par exemple une forme courbée au repos et sera comprimé par le serrage.

Dans une variante non représentée, on pourrait n'avoir qu'une vis de réglage du parallélisme des becs, l'autre étant remplacée par un ressort assez fort. De cette manière, le réglage serait facilité puisqu'il ne s'effectuerait plus qu'avec une seule vis.

La position du bec fixe est bloquée à l'aide des vis de blocage 85 et 86 qui maintiennent la position radiale du bec.

Avec cette configuration du bec fixe, les deux becs peuvent être usinés séparément sans devoir s'occuper du parallélisme, mais uniquement de la rectitude des faces de référence 4 et 8.

D'autres variantes de réalisation entrant dans le cadre de l'invention n'ont pas été représentées. Par exemple, le dispositif de guidage pourrait comporter plus de deux axes de guidage, par exemple 3 ou 4 axes de guidage, soit répartis sur des faces différentes, soit regroupés avec plusieurs axes de guidage sur au moins certaines faces.

## Revendications

1. Dispositif de mesure de longueur comportant:
- une perche (2) munie sur une première face d'une première coulisse (27) longitudinale et sur une deuxième face opposée à ladite première face d'une deuxième coulisse longitudinale (22),
- un coulisseau (6) pouvant coulisser le long de ladite perche, la position dudit coulisseau par rapport à ladite perche permettant de mesurer une longueur, ledit coulisseau étant muni d'une première gorge (26) longitudinale et d'une deuxième gorge longitudinale (23),
- un premier axe de guidage longitudinal (25) engagé dans ladite première coulisse (27) et dans ladite première gorge (26),
- un deuxième axe de guidage longitudinal (21) engagé dans ladite deuxième coulisse (22) dans ladite deuxième gorge (23),
caractérisé en ce que la surface de contact (32) entre la première coulisse (27) et le premier axe de guidage (25) est inférieure à la surface externe de la partie de l'axe engagée dans ladite première coulisse, et en ce que ledit coulisseau (6) peut coulisser le long de ladite perche sans contact direct.

2. Dispositif de mesure de longueur selon la revendication précédente, caractérisé en ce que la surface de contact (24) entre la deuxième coulisse et le second axe de guidage (21) est inférieure à la surface externe de la partie de l'axe engagée dans ladite deuxième coulisse.

3. Dispositif de mesure de longueur selon l'une des revendications précédentes, caractérisé en ce qu'au moins une desdites surfaces de contact est réduite à un ou plusieurs segments de droites.

4. Dispositif de mesure de longueur selon l'une des revendications précédentes, caractérisé en ce que ladite première coulisse et/ou ladite deuxième coulisse a un profil arrondi.

5. Dispositif de mesure de longueur selon la revendication précédente, caractérisé en ce que la partie dudit axe de guidage engagée dans ladite première coulisse, respectivement la partie dudit axe de guidage engagée dans ladite deuxième coulisse, a une section correspondant à un segment circulaire, et en ce que ladite première coulisse, respectivement ladite deuxième coulisse, a une section correspondant à un segment circulaire d'un cercle de diamètre supérieur.

6. Dispositif de mesure de longueur selon l'une des revendications 1 à 5, caractérisé en ce qu'au moins un desdits axes de guidage est en appui sur ledit coulisseau à ses deux extrémités seulement.

7. Dispositif de mesure de longueur selon la revendication précédente, caractérisé en ce que le premier axe de guidage est maintenu en appui contre ladite perche à l'aide d'un élément de ressort (29).

8. Dispositif de mesure de longueur selon l'une des revendications 6 ou 7, caractérisé en ce que des vis (28) à travers le coulisseau permettent de régler la force d'appui du premier axe de guidage sur la perche.

9. Dispositif de mesure de longueur selon la revendication précédente, caractérisé en ce que ledit premier axe est appuyé contre ladite perche à ses deux extrémités par lesdites vis et sur le reste de sa longueur par ledit élément de ressort.

10. Dispositif de mesure de longueur selon l'une des revendications 1 à 9, caractérisé en ce que la perche et/ou le coulisseau sont réalisés en aluminium.

11. Dispositif de mesure de longueur selon l'une des revendications 1 à 9, caractérisé en ce que la perche et/ou le coulisseau sont réalisés en matériau synthétique.

12. Dispositif de mesure de longueur selon l'une des revendications 1 à 11, caractérisé en ce que lesdits axes de guidage sont réalisés en aluminium anodisé, en acier, en bronze ou en bronze au beryllium.

13. Dispositif de mesure de longueur selon la revendication 12, caractérisé en ce que lesdits axes sont recouverts de Téflon.

14. Pied à coulisse comprenant le dispositif de l'une des revendications précédentes.

15. Pied à coulisse selon la revendication précédente, caractérisé en ce que le parallélisme des becs peut être corrigé à l'aide d'au moins une vis (81, 82) permettant de faire pivoter au moins un des becs.

16. Pied à coulisse selon la revendication précédente, caractérisé en ce que le parallélisme des becs peut être corrigé à l'aide d'au moins une vis (81, 82) permettant de faire pivoter le bec fixe autour d'un axe (80).

17. Pied à coulisse selon la revendication précédente, caractérisé en ce que le parallélisme des becs peut être corrigé à l'aide de deux vis en opposition permettant de faire pivoter le bec fixe.

18. Trusquin comprenant le dispositif de l'une des revendications 1 à 16.

## Claims

1. Device for measuring length comprising:
- a beam (2) provided on a first face with a first longitudinal slideway (27) and, on a second face opposite the said first face, a second longitudinal slideway (22),
- a slider (6) able to slide along the said beam, the position of the said slider with respect to the said beam permitting measurement of a length, the said slider being provided with a first longitudinal groove (26) and with a second longitudinal groove (23),
- a first longitudinal guide shaft (25) engaged in the said first slideway (27) and in the said first groove (26),
- a second longitudinal guide shaft (21) engaged in the said second slideway (22) and in the said second groove (23),
characterised in that the contact surface (32) between the said first slideway (27) and the first guide shaft (25) is less than the outer surface of the part of the shaft engaged in the said first slideway, and in that the said slideway (6) can slide along the said beam without direct contact.

2. Device for measuring length according to the preceding claim, characterised in that the contact surface (24) between the second slideway and the second guide shaft (27) is less than the outer surface of the part of the shaft engaged in the said second slideway.

3. Device for measuring length according to one of the preceding claims, characterised in that at least one of the said contact surfaces is reduced to one or more segments of a line.

4. Device for measuring length according to one of the preceding claims, characterised in that the said first slideway and/or the said second slideway has a rounded profile.

5. Device for measuring length according to the preceding claim, characterised in that the part of the said guide shaft engaged in the said first slideway, respectively the part of the said guide shaft engaged in the said second slideway, has a cross-section corresponding to a circular segment, and in that the said first slideway, respectively the said second slideway, has a cross-section corresponding to a circular segment of a circle of greater diameter.

6. Device for measuring length according to one of the claims 1 to 5, characterised in that at least one of the said guide shafts is supported on the said slider at its two ends only.

7. Device for measuring length according to the preceding claim, characterised in that the first guide shaft is held supported against the said beam with the aid of a spring element (29).

8. Device for measuring length according to one of the claims 6 or 7, characterised in that screws (28) through the slider allow regulation of the force of support of the first guide shaft on the beam.

9. Device for measuring length according to the preceding claim, characterised in that the said first shaft is supported against the said beam at its two ends by the said screws and on the rest of its length by the said spring element.

10. Device for measuring length according to one of the claims 1 to 9, characterised in that the beam and/or the slider are made of aluminium.

11. Device for measuring length according to one of the claims 1 to 9, characterised in that the beam and/or the slider are made of a synthetic material.

12. Device for measuring length according to one of the claims 1 to 11, characterised in that the said guide shafts are made of anodised aluminium, of steel, of bronze or of beryllium bronze.

13. Device for measuring length according to claim 12, characterised in that the said shafts are covered with Teflon.

14. Sliding caliper comprising the device of one of the preceding claims.

15. Sliding caliper according to the preceding claim characterised in that the parallelism of the jaws can be corrected with the aid of at least one screw (81, 82) permitting pivoting of at least one of the jaws.

16. Sliding caliper according to the preceding claim characterised in that the parallelism of the jaws can be corrected with the aid of at least one screw (81, 82) permitting pivoting of the fixed jaw about an axis (80).

17. Sliding caliper according to the preceding claim, characterised in that the parallelism of the jaws can be corrected with the aid of two screws in opposition permitting pivoting of the fixed jaw.

18. Height gauge comprising the device according to one of the claims 1 to 16.

## Patentansprüche

1. Längenmessvorrichtung, enthaltend:
- einen Stab (2), der auf einer ersten Fläche mit einer ersten Längs-Gleitführung (27) und auf einer zweiten Fläche gegenüber der genannten ersten Fläche mit einer zweiten Längs-Gleitführung (22) versehen ist,
- einen Schieber (6), der entlang der genannten Stange gleiten kann, wobei die Position des genannten Schiebers in bezug auf die genannte Stange das Messen einer Länge erlaubt und wobei der genannte Schieber mit einer ersten Längsrille (26) und einer zweiten Längsrille (23) versehen ist,
- eine in der genannten ersten Gleitführung (27) und in der genannten ersten Rille (26) eingesetzte erste Längs-Führungsachse (25)
- eine in der genannten zweiten Gleitführung (22) und in der genannten zweiten Rille (23) eingesetzte zweite Längs-Führungsachse (21)
dadurch gekennzeichnet, dass die Kontaktoberfläche (32) zwischen der ersten Gleitführung (27) und der ersten Führungsachse (25) gegenüber der äusseren Oberfläche des Teils der in der genannten ersten Gleitführung eingesetzten Achse zurücksteht und dass der genannte Schieber (6) ohne direkten Kontakt entlang dem genannten Stab gleiten kann.

2. Längenmessvorrichtung nach dem vorangehenden Anspruch, dadurch gekennzeichnet, dass die Kontaktoberfläche (24) zwischen der zweiten Gleitführung und der zweiten Führungsachse (21) gegenüber der äusseren Oberfläche des Teils der in der genannten zweiten Gleitführung eingesetzten Achse zurücksteht.

3. Längenmessvorrichtung nach einem der vorangehenden Ansprüche, dadurch gekennzeichnet, dass mindestens eine der genannten Kontaktoberflächen auf ein oder mehrere Segmente von geraden reduziert ist.

4. Längenmessvorrichtung nach einem der vorangehenden Ansprüche, dadurch gekennzeichnet, dass die genannte erste Gleitführung und/oder die genannte zweite Gleitführung ein rundliches Profil hat.

5. Längenmessvorrichtung nach dem vorangehenden Anspruch, dadurch gekennzeichnet, dass der Teil der in der genannten ersten Gleifführung eingesetzten Führungsachse, beziehungsweise der Teil der in der genannten zweiten Gleifführung eingesetzten Führungsachse einen einem Kreissegment entsprechenden Abschnitt hat und dass die genannte erste Gleitführung beziehungsweise die genannte zweite Gleitführung einen einem Kreissegment mit einem grösseren Kreisdurchmesser entsprechenden Abschnitt hat.

6. Längenmessvorrichtung nach einem der Ansprüche 1 bis 5, dadurch gekennzeichnet, dass sich mindestens eine der genannten Führungsachsen am genannten Schieber nur an seinen beiden Enden abstützt.

7. Längenmessvorrichtung nach dem vorangehenden Anspruch, dadurch gekennzeichnet, dass die erste Führungsachse mit Hilfe eines Federelementes (29) gegen den genannten Stab in Anlage gehalten wird.

8. Längenmessvorrichtung nach einem der Ansprüche 6 oder 7, gekennzeichnet durch sich quer durch den Schieber erstreckende Schrauben (28), die es erlauben, Anlagekraft der ersten Führungsachse am Stab einzustellen.

9. Längenmessvorrichtung nach dem vorangehenden Anspruch, dadurch gekennzeichnet, dass die genannte erste Achse an ihren beiden Enden durch die genannten Schrauben gegen den Stab abgestützt ist und auf dem Rest ihrer Länge durch das genannte Federelement.

10. Längenmessvorrichtung nach einem der Ansprüche 1 bis 9, dadurch gekennzeichnet, dass der Stab und/oder der Schieber aus Aluminium ausgeführt sind.

11. Längenmessvorrichtung nach einem der Ansprüche 1 bis 9, dadurch gekennzeichnet, dass der Stab und/oder der Schieber aus synthetischem Material ausgeführt sind.

12. Längenmessvorrichtung nach einem der Ansprüche 1 bis 11, dadurch gekennzeichnet, dass die genannten Führungsachsen aus anodisiertem Aluminium, aus Stahl, aus Bronze oder aus Berylliumbronze ausgeführt sind.

13. Längenmessvorrichtung nach Anspruch 12, dadurch gekennzeichnet, dass die genannten Achsen mit Teflon beschichtet sind.

14. Schieblehre enthaltend die Vorrichtung eines der vorangehenden Ansprüche.

15. Schieblehre nach dem vorangehenden Anspruch, dadurch gekennzeichnet, dass die Parallelität der Schnäbel mit Hilfe mindestens einer Schraube (81, 82) korrigiert werden kann, die es erlaubt, mindestens einen der Schnäbel zu schwenken.

16. Schieblehre nach dem vorangehenden Anspruch, dadurch gekennzeichnet, dass die Parallelität der Schnäbel mit Hilfe mindestens einer Schraube (81, 82) korrigiert werden kann, die es erlaubt, den festen Schnabel um eine Achse (80) zu schwenken.

17. Schieblehre nach dem vorangehenden Anspruch, dadurch gekennzeichnet, dass die Parallelität der Schnäbel mit Hilfe zweier gegenüberliegender Schrauben korrigiert werden kann, die es erlaubten, den festen Schnabel zu schwenken.

18. Anreissgerät enthaltend die Vorrichtung eines der Ansprüche 1 bis 16.
